# EUROPEAN PATENT APPLICATION

(11) **EP 4 759 784 A1**
(43) Date of publication of application: **17.06.2026**
(21) Application number: 25208050.2
(22) Date of filing: 10.10.2025
(51) Int. Cl.: C04B 28/14, C04B 28/26, C04B 18/10, C04B 111/10

(54) **ALTERNATIVE BINDER TO CEMENT FROM LOCAL TECHNOGENIC WASTE**

(30) Priority: 16.12.2024 LT 2024020
(71) Applicant: Vilniaus Gedimino technikos universitetas, 10223 Vilnius (LT)
(72) Inventor: Pundiene, Ina, 03127 Vilnius (LT); Pranckeviciene, Jolanta, 13107 Vilnius (LT); Kligys, Modestas, 03151 Vilnius (LT); Girskas, Giedrius, 01400 Vilnius (LT); Bacinskas, Darius, 08235 Vilnius (LT)
(74) Representative: AAA Law

(57) **Abstract**

The invention belongs to the building materials industry and can be applied to expand the nomenclature of building materials binders. This is manifested in the fact that the resulting alternative binder ensures sufficient properties required for binders. This binder can ensure sufficient density, compressive strength and thermal conductivity properties of construction products. Products based on this binder can perform the functions of both structural and thermal insulation products. The alternative binder consists of extractive hemihydrate phosphogypsum, biofuel ash, sodium silicate and sodium carbonate. After determining the properties of the binder, the following results were obtained: density - 1280+1520 kg/m3, compressive strength - 6.5÷20.7 MPa, and thermal conductivity coefficient - 0.2110÷0.2232 W/m·K. The values of these indicators are sufficient for products based on this binder to comply both with structural and thermal insulation properties. The proposed alternative binder fully complies with the third waste management priority of the Law on Waste Management of the Republic of Lithuania, "to produce products or secondary raw materials suitable for the production of products from the resulting waste."

## Description

### FIELD OF THE INVENTION

The invention belongs to the building materials industry and is intended to expand the nomenclature of binding materials.

### TECHNICAL LEVEL

The modern binder industry widely uses natural raw materials, the resources of which are depleting, and a large part of them could be replaced with technogenic waste. Such waste could be extractive hemihydrate phosphogypsum (hereinafter referred to as E-HG), of which more than 1 million m³ are generated annually in Lithuania, as well as ash waste generated during the combustion of increasingly widely used biofuels.

The proposed binder fully complies with the third waste management priority of the Law on Waste Management of the Republic of Lithuania: "to produce products or secondary raw materials suitable for the production of products from the resulting waste."

In modern construction, there is no alternative to cement as a binding material. Cement is widely used for the production of both massive structures and less important structural products, although in the production of the latter, a binding material with lower mechanical properties can be used.

Cement production requires a lot of natural raw materials, the resources of which are running out, and a lot of energy (the raw materials are fired at a temperature of 1450 °C). In addition, cement production is responsible for 9% of global CO₂ emissions. Therefore, it is currently particularly relevant to develop new binding materials that require less input of resources and energy. One way to achieve this goal is to make wider use of waste from various industries.

A method is known for obtaining gypsum binding materials (LT 4698). The compressive strength of the resulting binder (13.4-42.9 MPa) is sufficient for structural products, but it is necessary to prepare or import special additives (hydrated magnesium hydroxide, SiO₂ microsilica). A method for producing anhydrite binder (LT 4050) is also known, but in this case, firing at a temperature of 850-950 °C is required, which makes high energy consumption.

The disadvantage of all the materials described above is high energy consumption.

The modern Lithuanian building materials market lacks alternative binders that could be used for wall partitions or flooring. A binder made from waste raw materials with low energy consumption and capable of curing under ambient conditions is very relevant in order to reduce cement usage. The use of such materials would help solve another extremely relevant problem of today - reducing environmental pollution by technogenic waste. Binders, such as those proposed in this patent, have not been found in the literature.

There is a known structural thermal insulation material, created from technogenic waste - extractive hemihydrate phosphogypsum, cement and opoka. This material has sufficient strength properties (compressive strength 7.1÷8.9 Mpa), density 1150÷1450 kg/m³ and thermal insulation properties (thermal conductivity coefficient - 0.3062÷0.3515 W/m·K), which would allow it to be used both as a structural and thermal insulation material.

The disadvantage of the aforementioned material is the need to use opoka, the preparation of which is expensive (extraction, drying, intensive grinding). This complicates the production technology of such materials, increases the safety requirements and increases the cost of the material.

Several attempts are known to obtain alternative binders from phosphogypsum waste and ash of various origins.

A material created from phosphogypsum and ground granulated blast furnace slag (GGBS), activated with sodium hydroxide or sodium silicate, is known. This material has a compressive strength of 10-12 MPa when only sodium silicate is used, and 15-22 MPa if sodium hydroxide is used. The disadvantage of the material is the complex production technology: 24 hours of curing at a temperature of 90-110°C is required. Such operations require significant energy and time expenditure. Sodium hydroxide is a component that takes a lot of energy ( K. Gijbels, R.I. lacobescu, Y. Pontikes, S. Schreurs, W. Schroeyers, Alkali-activated binders based on ground granulated blast furnace slag and phosphogypsum, Constr. Build. Mater. 2019, 215, 371-380. https://doi.org/10.1016/J.CONBUILDMAT.2019.04.194 ), while additional safety measures must be taken when working with this component.

A material is known, created from phosphogypsum, bottom ash and fly ash, activated with sodium hydorxide and sodium silicate. The created material has a compressive strength of 3-14 MPa. The density and drying shrinkage of a material are important indicators of its properties. Sodium hydroxide, which is one of the ingredients of the material, is a component that requires a lot of energy.

A common disadvantage of the above materials is the need to use sodium hydroxide. This complicates the production technology of such materials, increases safety requirements and their cost.

The closest binding material (prototype) in terms of purpose and properties is described in the work of D. Vaičiukyniené (D. Vaičiukyniené, D. Nizevičiené, A. Kantautas, V. Bocullo, A. Kiele, Alkali Activated Paste and Concrete Based on Biomass Bottom Ash with Phosphogypsum, Appl. Sci. 10 (2020) 5190. https://doi.org/10.3390/APP10155190). The binding material is made of phosphogypsum, biofuel ash waste, sodium hydroxide or sodium silicate, and a mixture thereof. The described binder has high density (1880-2020 kg/m³) and compressive strength (9-24 MPa). However, the binder contains sodium hydroxide, a component that requires a lot of energy.

### SUMMARY OF THE INVENTION

The modern Lithuanian building materials market lacks binding materials that allow saving natural raw materials by replacing them with up to 90% technogenic waste. There is also a lack of materials with a simple production process, good mechanical properties, lightness, and low energy requirements for production.

The examples described here show that the binding materials developed so far are characterized by relatively complex production technology or components that are characterized by high energy consumption.

The aim of the invention is to create an alternative binder by using technogenic waste that is abundant in Lithuania (extractive hemihydrate phosphogypsum and biofuel combustion ash waste), which would ensure sufficient mechanical properties and could be used for the production of partitions (walls, roofs and floors) of residential and industrial buildings.

The aforementioned waste makes up to 90% of the composition of the alternative construction binder. The remaining part consists of sodium silicate produced in Lithuania and an easily extracted natural raw material - sodium carbonate.

The properties of the developed alternative binder are sufficient and meet the requirements for products for residential and industrial building partitions (walls, roofs and floors). The developed binder could be used for the production of partitions for residential and industrial buildings. Depending on the composition, the compressive strength of the alternative construction binder varies from 10 to 20 MPa, and the density ranges from 1300 to 1600 kg/m³. The thermal conductivity coefficient is 0.227-0.211 W/(m·K).

This goal was achieved by selecting the following composition for the binder material, which consists of two parts:
The solid part of the binding material consists of extractive hemihydrate phosphogypsum (10-50 % by weight) and biofuel ash (50-90 % by weight);

The activator is sodium silicate (5% by weight) and the raw material is sodium carbonate (5% by weight).

At a content of less than 10% extractive hemihydrate phosphogypsum, the binder has a high density and low compressive strength, making it unsuitable for ensuring minimum strength values. With a biofuel content of less than 50%, sufficient compressive strength of the binder is also not ensured.

Products made from the described binder could be used for partitions and floors in residential and industrial buildings.

### DETAILED DESCRIPTION

The main features and advantages characterizing the essence of the invention are presented in the table.

**Table. The main features and advantages characterizing the essence of the invention**

| Batch No. | Binder composition, % | | | | Density kg/m³ | Compressive strength, MPa | Thermal conductivity coefficient, W/m·K |
|---|---|---|---|---|---|---|---|
| | FG | BFA | | | | | |
| 1 | 10 | 90 | - | - | 1520 | 6.50 | 0.2232 |
| 2 | 20 | 80 | | - | 1470 | 13.1 | 0.2194 |
| 3 | 30 | 70 | - | | 1420 | 20.7 | 0.2136 |
| 4 | 40 | 60 | - | - | 1360 | 17.4 | 0.2113 |
| 5 | 50 | 50 | | - | 1280 | 11.3 | 0.2110 |

The proposed binder to be produced fully complies with the third waste management priority of the Law on Waste Management of the Republic of Lithuania: "to produce products or secondary raw materials suitable for the production of products from the resulting waste."

## Claims

1. An alternative binder consisting of a solid part of the binder and an activator, **characterized in that** the binder consists of extractive hemihydrate phosphogypsum and biofuel ash, and the activator consists of sodium silicate and sodium carbonate, in the following mass ratio: the solid part of the binder consists of extractive hemihydrate phosphogypsum (10-50 % by weight) and biofuel ash (50-90 % by weight), and the activator consists of sodium silicate (5 % by weight) and sodium carbonate (5 % by weight).

2. The binder specified in point 1, **characterized in that** up to 90% of its mass consists of technogenic waste - extractive hemihydrate phosphogypsum and biofuel ash.

3. The binder according to claim 1, **characterized in that** it does not require the use of a component that requires a lot of energy, meaning sodium hydroxide, and does not require a special 24-hour heat treatment at a temperature of 90-110 °C to ensure the properties of the binder.
